# EUROPÄISCHE PATENTSCHRIFT

(11) **EP 3 350 228 B1**
(45) Veröffentlichungstag und Bekanntmachung des Hinweises auf die Patenterteilung: **18.12.2019**
(21) Anmeldenummer: 16766533.0
(22) Anmeldetag: 13.09.2016
(51) Int. Cl.: C08B 11/145, C09J 101/28

(54) **VERWENDUNG VON CELLULOSEETHERN MIT 3-AZIDO-HYDROXYALKYL-GRUPPEN IN WASSERUNLÖSLICHEN KLEBSTOFFEN**
USE OF CELLULOSE ETHERS WITH 3-AZIDO-HYDROXYALKYL-GROUPS IN WATERINSOLUBLE ADHESIVES
UTILISATION DE ÉTHERS DE CELLULOSE AVEC DES GROUPES 3-AZIDO-HYDROXYLÉS DANS DES COLLES INSOLUBLE DANS L'EAU

(30) Priorität: 18.09.2015 DE 102015115804
(43) Veröffentlichungstag der Anmeldung: 25.07.2018
(73) Patentinhaber: SE Tylose GmbH & Co.KG, 65203 Wiesbaden (DE)
(72) Erfinder: KLEINERT, Mike, 65203 Wiesbaden (DE)
(74) Vertreter: Plate, Jürgen
(86) Internationale Anmeldenummer: PCT/EP2016/071569
(87) Internationale Veröffentlichungsnummer: WO 2017/046090

(56) Entgegenhaltungen:
- EP-A1- 2 712 873
- WO-A1-03/004562
- M. BONET ET AL: "The roles of the degree of substitution and the degree of polymerization on the behaviour of cellulose ethers applied as adhesives for artwork conservation", JOURNAL OF ADHESION SCIENCE AND TECHNOLOGY, Bd. 19, Nr. 2, 1. Januar 2005 (2005-01-01) , Seiten 95-108, XP055308982, GB ISSN: 0169-4243, DOI: 10.1163/1568561053148458

## Beschreibung

Die Erfindung betrifft die Verwendung von Celluloseethern mit 3-Azido-hydroxyalkyl-Gruppen in wasserunlöslichen Klebstoffen. Die Celluloseether sind insbesondere nicht-ionische Mischether, basierend auf Hydroxyalkylcellulosen, wie Hydroxyethylcellulose (HEC) oder Hydroxypropylcellulose (HPC) mit einer Coveretherung durch Azidohydroxyalkylsubstituenten. Die Klebstoffe sind insbesondere geeignet zum Verkleben von Papier, Pappe, Holz oder anderen Werkstoffen, die auf Cellulose basieren oder Cellulose enthalten.

Nicht-ionische Celluloseether, die 3-Azido-2-hydroxyalkyl-Gruppen, insbesondere 3-Azido-2-hydroxypropyl-Gruppen (AHP-Gruppen) enthalten, wie auch Verfahren zu deren Herstellung sind bereits in der EP 2 712 873 A1 offenbart. Die so modifizierten Celluloseether sind wasserlöslich. Durch den Einbau der genannten Gruppen lassen sich die rheologischen Eigenschaften der Celluloseether in weiten Bereichen modifizieren, indem die Azidtermini mit Alkinen zur Reaktion gebracht werden.

Celluloseether lassen sich bekanntermaßen auch als Klebstoffe (z.B. Tapetenkleister) verwenden. Unter der Einwirkung von Wasser oder Feuchtigkeit läßt die Klebewirkung jedoch stark nach, weil die Celluloseether mehr oder weniger stark aufgelöst werden.

Es bestand daher die Aufgabe, Celluloseether bereitzustellen, mit denen sich Klebeverbindungen herstellen lassen, die auch in feuchter Umgebung nicht an Klebekraft verlieren.

Gefunden wurde nunmehr, dass wasserlösliche Celluloseether mit 3-Azido-2-hydroxypropyl-Gruppen feuchtigkeitsstabile Klebeverbindungen ergeben, wenn sie mit Alkinen und Kupfer- und/oder Ruthenium-Katalysatoren gemischt werden. Dabei reagieren die Azid-Gruppen mit den Alkin-Gruppen in einer Cycloadditionsreaktion zu [1,2,3]Triazol-Gruppen. Dadurch wird ein fester Klebstoff erhalten, der seine Eigenschaften auch in feuchter Umgebung behält.

Gegenstand der Erfindung ist somit die Verwendung von nicht-ionischen, wasserlöslichen Celluloseethern mit 3-Azido-2-hydroxypropyl-Gruppen, die über eine Etherbindung mit der Cellulose bzw. mit dem Celluloseether verbunden sind, wobei der molare Substitutionsgrad MS_{AHP} im Bereich von 0,001 bis 0,30 liegt, zur Herstellung von wasserunlöslichen, festen Klebstoffen. Neben den 3-Azido-2-hydroxypropylgruppen und den Hydroxyalkylgruppen können die Celluloseether noch Alkylgruppen aufweisen, insbesondere geradkettige oder verzweigte C1-C6-Alkylgruppen, wie Methyl-, Ethyl-, Propyl-, Isopropyl-, Butyl- oder Isobutyl-Gruppen. Die Hydroxyalkylgruppen weisen vorzugsweise 2 bis 6 Kohlenstoffatome auf, insbesondere handelt es sich um 2-Hydroxyethyl- oder 2-Hydroxypropyl-Gruppen.

Wasserunlösliche, feste Klebeverbindungen werden erhalten, wenn die wasserlöslichen Celluloseether mit AHP-Gruppen mit Alkinen oder Dialkinen vermischt und die AHP-Gruppen mit den Alkin-Gruppen umgesetzt sind, katalysiert durch Kupfer- und/oder Ruthenium-Verbindungen.

Bevorzugte Ausgangsmaterialien sind dementsprechend wasserlösliche, nicht-ionische Celluloseether, wie Hydroxyethylcellulose (HEC), Methylhydroxyethylcellulose (MHEC), Hydroxypropylcellulose (HPC) oder Methylhydroxypropyl-cellulose (MHPC). Bei Methylhydroxyethylcellulosen und Methylhydroxypropylcellulosen beträgt der DS(Me) allgemein 1,0 bis 2,5, bevorzugt 1,2 bis 2,5, besonders bevorzugt 1,4 bis 1,9, der MS (HE bzw. HP) allgemein 0,01 bis 1,0, bevorzugt 0,05 bis 0,8, besonders bevorzugt 0,05 bis 0,6. Bei Hydroxyethylcellulosen und Hydroxypropylcellulosen beträgt der MS(HE bzw. HP) allgemein 1,0 bis 4,0, bevorzugt 1,5 bis 3,3.

"Wasserlöslich" bedeutet im Zusammenhang mit der vorliegenden Erfindung, daß der unmodifizierte Celluloseether zu mehr als 1,0 % (w/w), bevorzugt zu mehr als 10 % (w/w), besonders bevorzugt zu mehr als 20 % (w/w), in kaltem Wasser (20 °C) löslich ist.

Die Celluloseether mit AHP-Gruppen sind erhältlich durch Umsetzung des entsprechenden Celluloseethers mit Glycidylazid. Die 3-Azido-2-hydroxy-propyl-Gruppen können dabei über die Hydroxylgruppen der Ethylenglykol- bzw. Propylenglykol-Seitenketten oder über die Hydroxylgruppen am Pyranosering gebunden sein. Der durchschnittliche Substitutionsgrad der Cellulose mit den 3-Azido-2-hydroxy-propyl-Gruppen (MS_{AHP}) liegt allgemein im Bereich von 0,001 bis 0,30 pro Anhydroglucose-Einheit, bevorzugt liegt der MS im Bereich von 0,05 bis 0,25. Die mit Azidogruppen substituierten Celluloseether haben zweckmäßig einen durchschnittlichen Polymersationsgrad DPₙ von 50 bis 4000, bevorzugt von 100 bis 2500, besonders bevorzugt von 250 bis 1500.

Celluloseether mit 3-Azido-2-hydroxypropyl-Gruppen lassen sich auch erhalten, wenn alkalisierte Cellulose unmittelbar nacheinander oder gleichzeitig mit einem Alkylenoxid und Glycidylazid in ein und demselben Reaktor in Form einer klassischen Co-Veretherung umgesetzt wird.

Bei der thermisch induzierten Huisgen-Cycloaddition entstehen Gemische von Regioisomeren. Die 1,3-dipolare Cycloaddition von Aziden an Alkine (Huisgen-Reaktion) erfolgt daher zweckmäßig mit Hilfe von Cu(I)-Katalysatoren. Dabei entstehen regioselektiv 1,4-disubstituierte [1,2,3]Triazole. Geeignet ist beispielsweise Cu(I)-bromid, Cu(I)-iodid oder Cu(I)-acetat. Katalytisch aktive Cu(I)-Salze lassen sich auch *in situ* herstellen, beispielsweise aus Kupfer(II)sulfat durch Reduktion mit Ascorbinsäure in wässriger Lösung. Die metallkatalysierten Reaktionen laufen in der Regel bereits bei Raumtemperatur ab. Die Umwandlung der flüssigen bzw. fließfähigen Ausgangsmaterialien in einen festen Klebstoff erfolgt auch bei Raumtemperatur innerhalb von wenigen Sekunden, allgemein in weniger als 60 Sekunden, bevorzugt in weniger als 10 Sekunden.

Die Azid-Alkin-Cycloaddition kann auch von Ruthenium-Verbindungen katalysiert werden, beispielsweise von Bis(triphenylphosphin)-cyclopentadienyl-ruthenium-chlorid. Dabei werden allerdings, im Unterschied zu der kupferkatalysierten Reaktion, regioselektiv 1,5-disubstituierte [1,2,3]Triazole erhalten.

Besonders geeignete Alkine sind Phenylacetylen, Propargylalkohol, Propiolsäure und andere Verbindungen mit einer terminalen C-C-Dreifachbindung. Es können auch Verbindungen mit 2 Kohlenstoff-Kohlenstoff-Dreifachbindungen (Diine) eingesetzt werden.

Allgemein geeignet als Alkin-Bausteine in der Huisgen-Reaktion sind:
a) Alkine der Formel H-C≡C-R⁴,
   wobei R⁴
      - ein geradkettiger oder verzweigter (C₁ - C₁₈)Alkylrest,
      - ein Alkenylrest der Formel -[CH₂]ₘ-CH=CH₂, wobei m eine ganze Zahl von 1 bis 8 ist,
      - ein substituierter Alkylrest der Formel -[CH₂]ₙ-CX₂Y,
   wobei n eine ganze Zahl von 0 bis 8 ist, X für Wasserstoff, Fluor oder Chlor steht und Y für Wasserstoff, Fluor, Chlor, NH₂, OH, O-CH₃, CO₂H oder CO₂CH₃ steht mit der Maßgabe, dass X und Y nicht zugleich für ein Wasserstoffatom stehen,
      - ein Polyoxyalkylenrest der Formel -[CH₂-CH₂-O]ₚ-CH₂Z,
   wobei p eine ganze Zahl von 1 bis 8 ist und Z für ein Wasserstoffatom oder eine Methylgruppe steht,
      - ein aromatischer Rest, bevorzugt eine Phenyl-, Biphenyl oder Naphthylgruppe,
      - ein substituierter aromatischer Rest, wobei die an aromatische Kohlenstoffatome gebundenen Substituenten gleich oder verschieden und ausgewählt sind aus der Gruppe bestehend aus H, F, Cl, NH₂, CH₃ oder OCH₃, mit der Maßgabe, dass nicht alle Substituenten zugleich für ein Wasserstoffatom stehen, oder
      - ein heterocyclischer Rest, wie 1*H*-Imidazol-1-carbonyloxymethyl, ist;
   oder
b) Diine der Formel H-C≡C-R⁵-C≡C-H,
   wobei R⁵
   - ein zweiwertiger aromatischer Rest, wie *ortho-, meta-* oder *para-*Phenylen, Biphenyl-4,4'-diyl oder Naphthalin-1,4-diyl, ist oder
   - ein substituierter zweiwertiger aromatischer Rest, wobei die an aromatische Kohlenstoffatome gebundenen Substituenten gleich oder verschieden und ausgewählt sind aus der Gruppe bestehend aus H, F, Cl, NH₂, CH₃ oder OCH₃, wobei auch verschiedene Substituenten kombiniert sein können, mit der Maßgabe, dass nicht alle Substituenten zugleich für ein Wasserstoffatom stehen.

Die Cycloadditionsreaktion läßt sich mit einer Vielzahl verschiedener Alkine durchführen. Damit sind auf einfache Weise feste Klebstoffe mit den verschiedenen Eigenschaften zugänglich. Die Reaktion ist damit wesentlich flexibler als eine konventionelle Pfropfungsreaktion. Sie kann in Gegenwart von Wasser, organischen Lösemitteln oder Mischungen von Wasser mit organischen Lösemitteln durchgeführt werden. Geeignete organische Lösemittel sind beispielsweise Tetrahydrofuran, Dioxan, Dimethylsulfoxid, Acetonitril, Methylenchlorid, Chloroform, Methanol, Ethanol, *tert.-*Butanol, Essigsäureethylester, Aceton oder Dimethylformamid.

AHP-HEC ist sehr gut wasserlöslich und bildet in Wasser eine klare, viskose Lösung. Überraschend wurde gefunden, dass sich die rheologischen Eigenschaften der gelösten AHP-HEC nach der Umsetzung mit Alkinbausteinen, beispielsweise mit Phenylacetylen, vollständig umkehren lassen. Aus viskosen Fluiden werden auf die beschriebene Weise Festkörper mit einem strukturelastischen Verhalten erhalten.

An die Alkin-Komponente können weitere Reste kovalent gebunden sein. Die aus der Cycloadditionsreaktion hervorgehenden Produkte können dementsprechend ionisch oder nicht-ionisch sein. Die weiteren Reste können auch Reaktiv-Farbstoffe, Chromophore, Vernetzungsbausteine oder andere Reste sein, die den Klebstoffen besondere Eigenschaften verleihen.

Die 1,3-dipolare Cycloadditionsreaktion erfolgt allgemein innerhalb von Sekunden mit minimalen Mengen an Katalysator. Der Katalysator muß nicht direkt mit dem AHP-Celluloseether und den Alkinen vermischt werden. Um die 1,3-dipolare Cycloaddition zu bewirken genügt es, wenn eines der zu verklebenden Werkstücke eine Kupfer- oder Rutheniumverbindung enthält oder damit imprägniert ist und in Kontakt mit der Mischung von AHP-Celluloseether und Alkin kommt. In alternativen Ausführungsformen ist der Katalysator entweder mit dem AHP-Celluloseether oder mit dem Alkin vorgemischt.

Die nachfolgenden Beispiele dienen zur Illustration der Erfindung. Prozente stehen darin für Gewichtsprozente soweit nicht anders angegeben oder aus dem Zusammenhang unmittelbar ersichtlich. DS- und MS-Werte wurden nach der Zeisel-Methode bestimmt.

### Beispiel 1: Kupfer-katalysierte Kupplung von Azidohydroxypropylhydroxy-ethylcellulose (AHP-HEC) mit Phenylacetylen und Cu-Katalyse zur Verklebung von Holz

10,0 g AHP-HEC (5% Wassergehalt, MS(HE)=1,1, MS(GA)= 0,15) wurden in 1000 ml kaltes Trinkwasser eingerührt und durch rühren bei Raumtemperatur gelöst. Die klare Lösung hatte eine Viskosität von ca. 250 mPa s (Brookfield, LV). Dazu wurden 2,0 g Phenylacetylen unter Rühren zugegeben, wodurch sich die Viskosität nicht meßbar verändert hat. Ein Teil (ca. 50 ml) dieser dickflüssigen, leicht trüben Mischung wurde nun auf zwei glatte, trockene Fichtenholzoberflächen mittels eines Pinsels aufgetragen. Nachdem ca. 5 min auf ein partielles Einziehen der Lösung in die Holzporen gewartet wurde, wurde eine der beiden Holzflächen mit einer Lösung bestehend aus 10,0 g Kupfersulfat-Pentahydrat und 18,0 g Ascorbinsäure in 60 ml entgastem, entmineralisiertem Wasser mit einer handelsüblichen Sprühflasche besprüht und sofort die andere, ebenfalls beleimte Holzfläche durch leichte Reibebewegungen angedrückt und fixiert, wie es technisch auch beim klassischen Verleimen von Holz geschieht.

Am nächsten Tag war die Verklebung getrocknet und die Holzstücke konnten nicht gegeneinander bewegt oder voneinander entfernt werden. Das Eintauchen der verklebten Holzplatten in Wasser über einen Zeitraum von 18 h hat die Verklebung nicht merklich beeinträchtigt und die Verbindung konnte unter erheblicher Krafteinwirkung zwar gebrochen werden, aber es wurden dabei Fasern aus dem jeweils anderen Werkstück ausgerissen.

### Beispiel 2: Verklebung von Holz wie oben beschrieben aber ohne Katalysatoreinfluß

Es wurde völlig analog wie in Beispiel 1 beschrieben vorgegangen bis auf das Versprühen der wässrigen Katalysatorlösung. Die beiden Holzwerkstücke wurden gleichermaßen zusammengefügt und über Nacht zusammengepresst fixiert. Auch hier war nach ca. 18 h Trockenlagerung eine Verbindung der beiden Holzstücke entstanden, die jedoch unter gewisser manueller Krafteinwirkung wieder gelöst werden könnte, ohne daß es jedoch zum Faserausriß gekommen ist.

Ein Wiederholungsversuch, in dem statt der Krafteinwirkung zum Lösen der Verklebung zunächst das verklebte Werkstück für ca. 6h in Wasser getaucht worden war, zeigte eine vollständige Auflösung der "Verleimung".

### Beispiel 3: Kupfer-katalysierte Kupplung von Azidohydroxypropylhydroxy-ethylcellulose (AHP-HEC) mit 1,4-Diethinylbenzol und Cu-Katalyse zur Verklebung von Holz

10,0 g AHP-HEC (5% WG, MS(HE)=1,1, MS(GA)= 0,15) wurden in 1000 ml kaltes Trinkwasser eingerührt und durch rühren bei Raumtemperatur gelöst. Die klare Lösung hatte eine Viskosität von ca. 250 mPa s (Brookfield, LV). Dazu wurden 2,0 g Diethinylbenzol [935-14-8] unter Rühren zugegeben, wodurch sich die Viskosität nicht meßbar verändert hat. Ein Teil (ca. 50 ml) dieser dickflüssigen, leicht trüben Mischung wurde nun auf zwei glatte, trockene Fichtenholzoberflächen mittels eines Pinsels aufgetragen. Nachdem ca. 5 min auf ein partielles Einziehen der Lösung in die Holzporen gewartet wurde, wurde eine der beiden Holzflächen mit einer Lösung bestehend aus 10,0 g Kupfersulfat-Pentahydrat und 18,0 g Ascorbinsäure in 60 ml entgastem, entmineralisiertem Wasser mit einer handelsüblichen Sprühflasche besprüht und sofort die andere, ebenfalls beleimte Holzfläche durch leichte Reibebewegungen angedrückt und fixiert, wie es technisch auch beim klassischen Verleimen von Holz geschieht.

Am nächsten Tag war die Verklebung getrocknet und die Holzstücke konnten nicht gegeneinander bewegt oder voneinander entfernt werden. Das Eintauchen der verklebten Holzplatten in Wasser über einen Zeitraum von 18 h hat die Verklebung nicht merklich beeinträchtigt und die Verbindung konnte unter erheblicher Krafteinwirkung zwar gebrochen werden, aber es wurden dabei Fasern aus dem jeweils anderen Werkstück ausgerissen.

## Patentansprüche

1. Verwendung von nicht-ionischen, wasserlöslichen Celluloseethern mit 3-Azido-2-hydroxypropyl-Gruppen, die über eine Etherbindung mit der Cellulose verbunden sind, wobei der molare Substitutionsgrad MS_{AHP} im Bereich von 0,001 bis 0,30 liegt, und wobei die Celluloseether mit Alkinen oder Dialkinen umgesetzt werden, katalysiert durch eine Kupfer- oder Rutheniumverbindung, zur Herstellung von wasserunlöslichen, festen Klebeverbindungen.

2. Verwendung gemäß Anspruch 1, **dadurch gekennzeichnet, dass** die Celluloseether neben 3-Azido-2-hydroxypropyl-Gruppen Alkyl- und/oder Hydroxyalkyl-Gruppen aufweisen.

3. Verwendung gemäß Anspruch 2, **dadurch gekennzeichnet, dass** die Alkylgruppen geradkettige (C₁ - C₆)Alkylgruppen sind, bevorzugt Methyl- oder Ethylgruppen.

4. Verwendung gemäß Anspruch 2 oder 3, **dadurch gekennzeichnet, dass** die Hydroxyalkylgruppen 2-Hydroxyethyl- oder 2-Hydroxypropyl-Gruppen sind.

5. Verwendung gemäß einem oder mehreren der Ansprüche 1 bis 4, **dadurch gekennzeichnet, dass** der MS_{AHP} im Bereich von 0,05 bis 0,25 liegt.

6. Verwendung gemäß einem oder mehreren der Ansprüche 2 bis 5, **dadurch gekennzeichnet, dass** bei Alkylhydroxyalkylcellulosen mit 3-Azido-2-hydroxypropylgruppen der DS(Alkyl) im Bereich von 1,0 bis 2,5 liegt, bevorzugt von 1,2 bis 2,1, besonders bevorzugt 1,4 bis 1,9, und der MS (HE bzw. HP) im Bereich von 0,01 bis 1,0 liegt, bevorzugt von 0,05 bis 0,8, besonders bevorzugt von 0,05 bis 0,6.

7. Verwendung gemäß einem oder mehreren der Ansprüche 2 bis 6, **dadurch gekennzeichnet, dass** bei Hydroxyalkylcellulosen mit 3-Azido-2-hydroxy-propylgruppen der MS(Hydroxyalkyl) im Bereich von 1,0 bis 4,0, bevorzugt von 1,5 bis 3,5, liegt.

8. Verwendung gemäß einem oder mehreren der Ansprüche 1 bis 7, **dadurch gekennzeichnet, dass** der mit AHP-Gruppen substituierte Celluloseether einen durchschnittlichen Polymerisationsgrad DPₙ von 50 bis 4.000, bevorzugt von 100 bis 2.000, besonders bevorzugt von 600 bis 1.400, aufweist.

9. Verwendung gemäß einem oder mehreren der Ansprüche 1 bis 8, **dadurch gekennzeichnet, dass** der mit 3-Azido-2-hydroxypropyl-Gruppen substituierte Celluloseether mit einem Alkin umgesetzt wird, katalysiert durch eine Kupfer- oder Ruthenium-Verbindung.

10. Verwendung gemäß Anspruch 9, **dadurch gekennzeichnet, dass** das Alkin
a) eine Verbindung der Formel H-C≡C-R⁴ ist,
wobei R⁴
ein geradkettiger oder verzweigter (C₁ - C₁₈)Alkylrest,
ein Alkenylrest der Formel -[CH₂]ₘ-CH=CH₂, wobei m eine ganze Zahl von 1 bis 8 ist,
ein substituierter Alkylrest der Formel -[CH₂]ₙ-CX₂Y,
wobei n eine ganze Zahl von 0 bis 8 ist, X für Wasserstoff, Fluor oder Chlor steht und Y für Wasserstoff, Fluor, Chlor, NH₂, OH, O-CH₃, CO₂H oder CO₂CH₃ steht mit der Maßgabe, dass X und Y nicht zugleich für ein Wasserstoffatom stehen,
ein Polyoxyalkylenrest der Formel -[CH₂-CH₂-O]ₚ-CH₂Z,
wobei p eine ganze Zahl von 1 bis 8 ist und Z für ein Wasserstoffatom oder eine Methylgruppe steht,
ein aromatischer Rest, bevorzugt eine Phenyl-, Biphenyl oder Naphthylgruppe,
ein substituierter aromatischer Rest, wobei die an aromatische Kohlenstoffatome gebundenen Substituenten gleich oder verschieden und ausgewählt sind aus der Gruppe bestehend aus -H, -F, -Cl, -NH₂, - CH₃ oder -OCH₃, mit der Maßgabe, dass nicht alle Substituenten zugleich für ein Wasserstoffatom stehen; oder
- ein heterocyclischer Rest ist;
oder
b) ein Diin der Formel H-C≡C-R⁵-C≡C-H ist,
wobei R⁵
ein zweiwertiger aromatischer Rest, wie *ortho-, meta-* oder *para-*Phenylen, Biphenyl-4,4'-diyl oder Naphthalin-1,4-diyl, ist oder
ein substituierter zweiwertiger aromatischer Rest, wobei die an aromatische Kohlenstoffatome gebundenen Substituenten gleich oder verschieden und ausgewählt sind aus der Gruppe bestehend aus H, F, Cl, NH₂, CH₃ oder OCH₃, mit der Maßgabe, dass nicht alle Substituenten zugleich für ein Wasserstoffatom stehen.

11. Verwendung gemäß Anspruch 9 oder 10, **dadurch gekennzeichnet, dass** das Alkin Phenylacetylen, Propargylalkohol, Propiolsäure oder 1*H*-Imidazol-1-carbonsäurepropargylester ist.

## Claims

1. Use of nonionic, water-soluble cellulose ethers with 3-azido-2-hydroxypropyl groups, joined to the cellulose via an ether bond, the degree of molar substitution _{MSAHP} being in the range from 0.001 to 0.30, and the cellulose ethers being reacted with alkynes or dialkynes, catalyzed by a copper compound or ruthenium compound, for producing water-insoluble, secure adhesive bonds.

2. Use according to Claim 1, **characterized in that** the cellulose ethers have alkyl and/or hydroxyalkyl groups as well as 3-azido-2-hydroxypropyl groups.

3. Use according to Claim 2, **characterized in that** the alkyl groups are straight-chain (C₁-C₆)alkyl groups, preferably methyl or ethyl groups.

4. Use according to Claim 2 or 3, **characterized in that** the hydroxyalkyl groups are 2-hydroxyethyl or 2-hydroxypropyl groups.

5. Use according to one or more of Claims 1 to 4, **characterized in that** the _{MSAHP} is in the range from 0.05 to 0.25.

6. Use according to one or more of Claims 2 to 5, **characterized in that** in the case of alkylhydroxyalkylcelluloses with 3-azido-2-hydroxypropyl groups, the DS(alkyl) is in the range from 1.0 to 2.5, preferably from 1.2 to 2.1, more preferably 1.4 to 1.9, and the MS (HE and/or HP) is in the range from 0.01 to 1.0, preferably from 0.05 to 0.8, more preferably from 0.05 to 0.6.

7. Use according to one or more of Claims 2 to 6, **characterized in that** in the case of hydroxyalkylcelluloses with 3-azido-2-hydroxypropyl groups, the MS(hydroxyalkyl) is in the range from 1.0 to 4.0, preferably from 1.5 to 3.5.

8. Use according to one or more of Claims 1 to 7, **characterized in that** the cellulose ether substituted by AHP groups has an average degree of polymerization DPₙ of 50 to 4000, preferably of 100 to 2000, more preferably of 600 to 1400.

9. Use according to one or more of Claims 1 to 8, **characterized in that** the cellulose ether substituted by 3-azido-2-hydroxypropyl groups is reacted with an alkyne, catalyzed by a copper compound or ruthenium compound.

10. Use according to Claim 9, **characterized in that** the alkyne
a) is a compound of the formula H-C≡C-R⁴,
where R⁴ is
a straight-chain or branched (C₁-C₁₈)alkyl radical,
an alkenyl radical of the formula -[CH₂]ₘ-CH=CH₂, where m is an integer from 1 to 8,
a substituted alkyl radical of the formula - [CH₂]ₙ-CX₂Y, where n is an integer from 0 to 8, X is hydrogen, fluorine or chlorine, and Y is hydrogen, fluorine, chlorine, NH₂, OH, O-CH₃, CO₂H or CO₂CH₃, with the proviso that X and Y are not both a hydrogen atom,
a polyoxyalkylene radical of the formula - [CH₂-CH₂-O]ₚ-CH₂Z,
where p is an integer from 1 to 8 and Z is a hydrogen atom or a methyl group, an aromatic radical, preferably a phenyl group, biphenyl or naphthyl group, a substituted aromatic radical, the substituents bonded to aromatic carbon atoms being identical or different and selected from the group consisting of -H, -F, -Cl, -NH₂, -CH₃ or -OCH₃, with the proviso that not all the substituents are a hydrogen atom; or
- is a heterocyclic radical;
or
b) is a diyne of the formula H-C≡C-R⁵-C≡C-H,
where R⁵ is
a divalent aromatic radical, such as *ortho-, meta-* or *para*-phenylene, biphenyl-4,4'-diyl or naphthalene-1,4-diyl, or
a substituted divalent aromatic radical, the substituents bonded to aromatic carbon atoms being identical or different and selected from the group consisting of H, F, Cl, NH₂, CH₃ or OCH₃, with the proviso that not all the substituents are a hydrogen atom.

11. Use according to Claim 9 or 10, **characterized in that** the alkyne is phenylacetylene, propargyl alcohol, propiolic acid or propargyl 1*H*-imidazole-1-carboxylate.

## Revendications

1. Utilisation d'éthers de cellulose non ioniques, solubles dans l'eau, comportant des groupes 3-azido-2-hydroxypropyle qui sont reliés par une liaison éther à la cellulose, dans laquelle le degré de substitution molaire MS_{AHP} se situe dans la plage de 0,001 à 0,30, et dans laquelle on fait réagir les éthers de cellulose avec des alcynes ou des dialcynes, catalysés par un composé de cuivre ou ruthénium pour la production de composés adhésifs solides insolubles dans l'eau.

2. Utilisation selon la revendication 1, **caractérisée en ce que** les éthers de cellulose présentent parallèlement aux groupes 3-azido-2-hydroxypropyle, des groupes alkyle et/ou hydroxyalkyle.

3. Utilisation selon la revendication 2, **caractérisée en ce que** les groupes alkyle sont des groupes alkyle (C₁-C₆) à chaîne linéaire, de préférence des groupes méthyle ou éthyle.

4. Utilisation selon la revendication 2 ou 3, **caractérisée en ce que** les groupes hydroxyalkyle sont des groupes 2-hydroxyéthyle ou 2-hydroxypropyle.

5. Utilisation selon une ou plusieurs des revendications 1 à 4, **caractérisée en ce que** le degré MS_{AHP} se situe dans la plage de 0,05 à 0,25.

6. Utilisation selon une ou plusieurs des revendications 2 à 5, **caractérisée en ce que**, concernant les alkylhydroxyalkylcelluloses comportant des groupes 3-azido-2-hydroxypropyle, la valeur DS(alkyl) se situe dans la plage de 1,0 à 2,5, de préférence de 1,2 à 2,1, le plus préférentiellement de 1,4 à 1,9, et la valeur MS (HE ou HP) se situe dans la plage de 0,01 à 1,0, de préférence de 0,05 à 0,8, le plus préférentiellement, de 0,05 à 0,6.

7. Utilisation selon une ou plusieurs des revendications 2 à 6, **caractérisée en ce que**, concernant les hydroxyalkylcelluloses comportant des groupes 3-azido-2-hydroxypropyle, la valeur MS(hydroxyalkyl) se situe dans la plage de 1,0 à 4,0, de préférence de 1,5 à 3,5.

8. Utilisation selon une ou plusieurs des revendications 1 à 7, **caractérisée en ce que** l'éther de cellulose substitué par des groupes AHP présente un degré de polymérisation moyen DPₙ de 50 à 4 000, de préférence de 100 à 2 000, le plus préférentiellement, de 600 à 1 400.

9. Utilisation selon une ou plusieurs des revendications 1 à 8, **caractérisée en ce que** l'on fait réagir l'éther de cellulose substitué par des groupes 3-azido-2-hydroxypropyle avec une alcyne, catalysé par un composé de cuivre ou ruthénium.

10. Utilisation selon la revendication 9, **caractérisée en ce que** l'alcyne
a) est un composé de formule H-C≡C-R⁴,
dans laquelle R⁴
est un radical alkyle (C₁-C₈) linéaire ou ramifié,
un radical alcényle de la formule -[CH₂]ₘ-CH=CH₂, dans laquelle m est un nombre entier de 1 à 8,
un radical alkyle substitué de la formule -[CH₂]ₙ-CX₂Y,
dans laquelle n est un nombre entier de 0 à 8, X représente de l'hydrogène, du fluor ou du chlore et Y, de l'hydrogène, du fluor, du chlore, NH₂, OH, O-CH₃, CO₂H ou CO₂CH₃ à condition que X et Y ne représentent pas en même temps un atome d'hydrogène,
un radical polyoxyalkylène de la formule -[CH₂-CH₂-O]ₚ₋CH₂Z,
dans laquelle p est un nombre entier de 1 à 8 et Z représente un atome d'hydrogène ou un groupe méthyle,
un radical aromatique, de préférence, un groupe phényle, biphényle ou naphtyle, un radical aromatique substitué, dans lequel les substituants liés aux atomes de carbone aromatiques sont identiques ou différents et sont choisis dans le groupe constitué par -H, -F, -Cl, -NH₂, -CH₃ ou -OCH₃ à condition que tous les substituants ne représentent pas en même temps un atome d'hydrogène ; ou
- un radical hétérocyclique ;
ou
b) est une diyne de la formule H-C≡C-R⁵-C≡C-H
dans laquelle R⁵
est un radical aromatique divalent tel que *ortho-, méta-* ou *para*-phénylène, biphényl-4,4'-diyle ou naphtalin-1,4-diyle, ou
un radical aromatique divalent substitué, dans laquelle les substituants liés aux atomes de carbone aromatiques sont identiques ou différents et sont choisis dans le groupe constitué par H, F, Cl, NH₂, CH₃ ou OCH₃ à condition que tous les substituants ne représentent pas en même temps un atome d'hydrogène.

11. Utilisation selon la revendication 9 ou 10, **caractérisée en ce que** l'alcyne est un phénylacétylène, un alcool propargylique, un acide propiolique ou un ester de propargile d'acide 1*H*-imidazol-1-carboxylique.
